# EUROPEAN PATENT SPECIFICATION

(11) **EP 1 177 697 B1**
(45) Date of publication and mention of the grant of the patent: **26.11.2003**
(21) Application number: 00901129.7
(22) Date of filing: 24.01.2000
(51) Int. Cl.: H04Q 7/22

(54) **METHOD AND SYSTEM FOR ESTABLISHING A CONNECTION**
VERFAHREN UND VORRICHTUNG ZUM VERBINDUNGSAUFBAU
PROCEDE ET SYSTEME D'ETABLISSEMENT DE CONNEXION

(30) Priority: 12.05.1999 WO PCT/EP99/03275
(43) Date of publication of application: 06.02.2002
(73) Proprietor: Nokia Corporation, 02150 Espoo (FI)
(72) Inventor: RÄSÄNEN, Juha, FIN-02660 Espoo (FI)
(74) Representative: Leson, Thomas Johannes Alois, Dipl.-Ing.
(86) International application number: EP0000527
(87) International publication number: WO00056087

(56) References cited:
- EP-A- 0 477 627
- EP-A- 0 847 174
- EP-A- 0 951 186
- WO-A-92/22976
- WO-A-99/16266

## Description

### FIELD OF THE INVENTION

The present invention relates to a method and system for establishing a connection in a telecommunication network, such as a mobile network.

### BACKGROUND OF THE INVENTION

In recent years, multimedia telephone terminals which can be connected to fixed networks have been developed. These terminals provide real-time video, audio, or data, or any combination thereof, between two multimedia telephone terminals over a voice band network connection. Communication may be either one-way or two-way. A multipoint communication using a separate Multipoint Control Unit (MCU) among more than two terminals is also possible. Furthermore, the multimedia telephone terminals can be integrated into PCs or work stations, or can be stand-alone units.

Interworking with such visual telephone systems on mobile radio networks is defined in the ITU-T video/multimedia recommendation H.324/M.

However, in general, a calling party does not know in advance whether or not the terminal of a called party supports the connection type underlying a desired call. Thus, inconvenient error processings and disconnections may occur, if the terminal of the called party does not support the desired connection type, e.g. the multimedia connection.

EP-A-0 477 627 describes a method for establishing an ISDN connection wherein it is checked if the called node supports a requested service. If not, an enlarged connection setup routine is executed.

### SUMMARY OF THE INVENTION

It is therefore an object of the present invention to provide a method and system for establishing a connection, by means of which error processings and disconnections due to a capability mismatch can be prevented.

This object is achieved by a method according to claims 1-12.

Furthermore, the above object is achieved by a system according to claims 13-20.

Accordingly, a fallback solution is provided, wherein a fallback connection, i.e. the second type of connection, is determined, such that another type of connection supported by the called party or another connection to another service, such as a speech service, can be established without disconnecting the calling party or performing a time-consuming error processing or messaging at the end terminals.

The determination of the second type of connection may be achieved based on a monitoring operation performed in a network element arranged between the calling party and the called party. The network element may then perform a connection fallback from the first type of connection (e.g. multimedia call) to the second type of connection (e.g. speech call).

Alternatively, the network element may determine as the second type of connection at least one type of connection supported by the called party, by monitoring a signaling for call establishment, wherein the call to the called party is then re-established as a connection of the supported type. The determination result may be signaled to the calling party which then performs the call re-establishment operation. Thereby, the risk of clearing the call due to a long waiting period can be removed.

Preferably, the network element is an interworking unit of the telecommunication network.

The first type of connection, which can be a multimedia connection, is established, when the result of checking indicates that the handshake processing was successful, i.e. that the other party supports the first type of connection.

Preferably, the handshake processing is an interworking processing which may be performed by an interworking function provided at a mobile switching center of a mobile network.

The first type of connection may be a video connection, and may be established between a mobile terminal of a mobile network and a network terminal of a fixed network.

The second type of connection can be determined on the basis of the handshake processing, or by performing another handshake processing with the other party. Alternatively, the second type of connection can be determined on the basis of the calling number of the other party. Moreover, the second type of connection may be determined on the basis of a predetermined priority order. The second type of connection may be a speech connection or any other type of connection, e.g. a multimedia or video connection, supported by the called party.

Initially, an HSCSD (High Speed Circuit Switched Data) call may be established to the other party. Then, the other party may reply by transmitting a request for the first type of connection.

Furthermore, the second type of connection can be established by performing a channel mode modification and changing the switching at a switching means.

Preferably, the apparatus for establishing the first type of connection is a mobile switching center, wherein the negotiating means corresponds to an interworking function provided at said mobile switching center.

### BRIEF DESCRIPTION OF THE DRAWINGS

In the following, the present invention will be described in greater detail on the basis of a preferred embodiment with reference to the accompanying drawings, in which:
Fig. 1 shows a principle block diagram of a mobile network connected to a fixed network 4,
Fig. 2 shows a principle block diagram of a mobile switching center according to the preferred embodiment of the present invention,
Fig. 3 shows a flow diagram of a procedure for establishing a mobile-originated multimedia connection according to the preferred embodiment of the present invention,
Fig. 4 shows a flow diagram of a procedure for establishing a mobile-terminated multimedia connection according to the preferred embodiment of the present invention, and
Fig. 5 shows a flow diagram of an alternative procedure for establishing a multimedia connection based on a call retry procedure according to the preferred embodiment of the present invention.

### DESCRIPTION OF THE PREFERRED EMBODIMENT

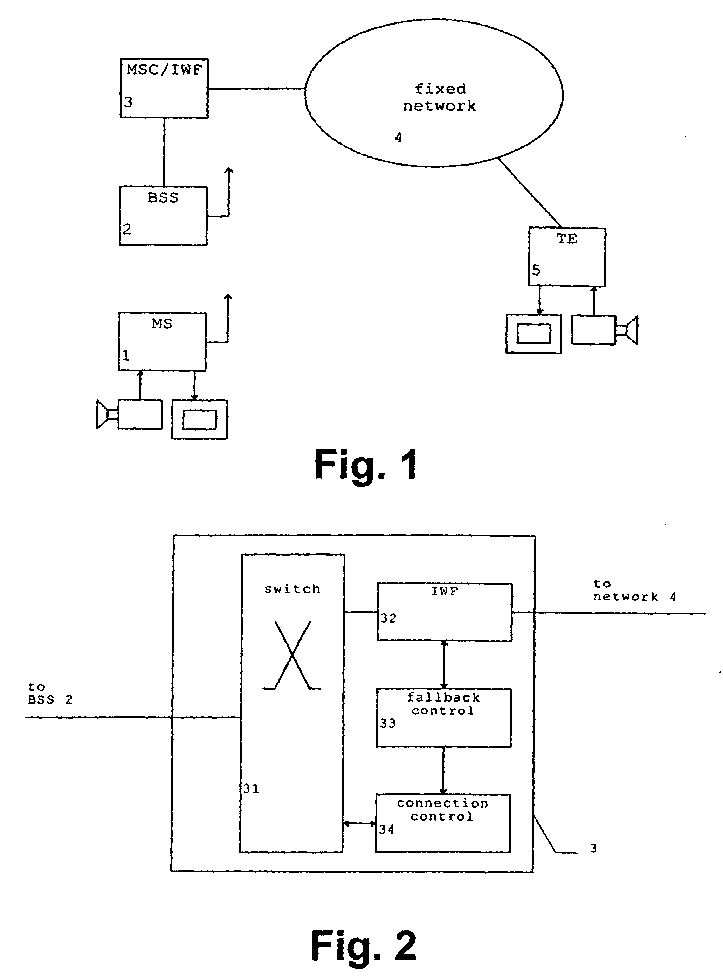

In the following, the present invention will be described on the basis of a preferred embodiment which relates to a multimedia connection between a fixed network 4 and a mobile network, as shown in Fig. 1.

According to Fig. 1, a multimedia end terminal (TE 5) is connected via the fixed network 4, such as a Public Switched Telephone Network (PSTN) or the like, to a mobile terminal or mobile station (MS 1) having a multimedia capability. The MS 1 is radio-connected to a Base Station Subsystem (BSS) 2 which is connected to a Mobile Switching Center (MSC/IWF) 3 having an interworking function. The interworking function is provided for adapting protocol features of the mobile network to protocol features of the fixed network 4.

According to the present invention, the MSC/IWF 3 is arranged to determine an auxiliary connection or fallback connection which is established in case the other party does not support a multimedia call.

Fig. 2 shows a principle block diagram of the MSC/IWF 3 according to the preferred embodiment of the present invention. According to Fig. 2, the MSC/IWF 3 comprises a switch 31 for performing a switching operation between the BSS 2 and the fixed network 4, so as to establish a requested connection. The switching operation of the switch 31 is controlled by a connection control unit 34 arranged to control the setup and establishment of the switched connections.

Furthermore, the MSC/IWF 3 comprises an interworking function (IWF) 32 which provides an interoperation with multimedia end terminals, such as the TE 5, over the fixed network 4. It is arranged to perform a transcoding, an error processing adaptation and a rate matching between the mobile network and the fixed network 4. Furthermore, the IWF 32 performs the negotiation processing in order to set up a voice band channel to the fixed network 4.

According to the preferred embodiment, the IWF 32 is connected to a fallback control unit 33 which is arranged to check the result of the negotiation performed by the IWF 32 and to control the connection control unit 34, so as to establish one of a multimedia connection and a fallback connection in response to the checking result.

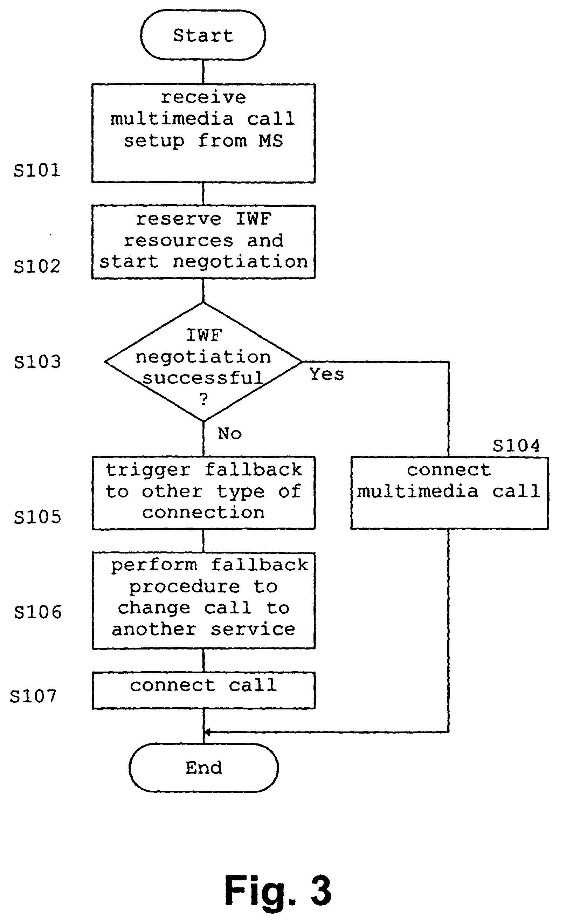

In the following, a processing performed by the MSC/IWF 3 in order to establish a mobile-originated multimedia connection is described with reference to Fig. 3.

Initially, the MS 1 requests a multimedia call, e.g. a H.324 call, and transmits a corresponding setup message to the MSC/IWF 3, which is received by the MSC/IWF 3 in step S101. The type of the requested call may be indicated e.g. in the Bearer Capability Information Element (BCIE) of the setup message.

Based on the received setup message, the MSC/IWF 3 checks the multimedia call, and the IWF 32 reserves the required interworking function resources and starts a handshake or negotiation processing with the fixed network 4 in order to set up the multimedia connection to the called party, e.g. the TE 5 (step S102). In particular, the negotiation processing may be a ITU-T V.8, V.8bis or V.140 procedure or the like.

Then, the fallback control unit 33 checks in step S103 whether the negotiation performed by the IWF 32 was successful, or not.

In case the fallback control unit 33 determines in step S103 that the negotiation was successful, it controls the connection control unit 34, so as to connect the multimedia call via the switch 31 (step S104). Thus, a connection such as a modem or UDI (Unrestricted Digital Information) connection is established between the IWF 32 and the called party, e.g. the TE 5.

If the fallback control unit 33 determines in step S103 that the negotiation was not successful, i.e. that the called party does not support the multimedia call, it triggers a fallback to another type of connection (step S105). The other type of connection may be determined on the basis of the negotiation performed by the IWF 32, or on the basis of an additional negotiation of the IWF 32, or on the basis of a default setting (e.g. fallback service such as speech), initiated by the fallback control unit 33.

Subsequently, the connection control unit 34 is controlled to perform a fallback procedure to change the actual call to another service, i.e. to switch the connection between the MS 1 and the MSC/IWF 3 to another service such as a speech service (step S106). This may be achieved by a channel mode modification of the channel between the MS 1 and the MSC/IWF 3, and a corresponding release of resources of the IWF 32, followed by a change of the switching performed by the switch 31 in the MSC/IWF 3. Finally, the call is connected via the fallback connection (step S107), such that the MS 1 is connected to an auxiliary or fallback service without disconnecting it or performing a time-consuming error processing or messaging.

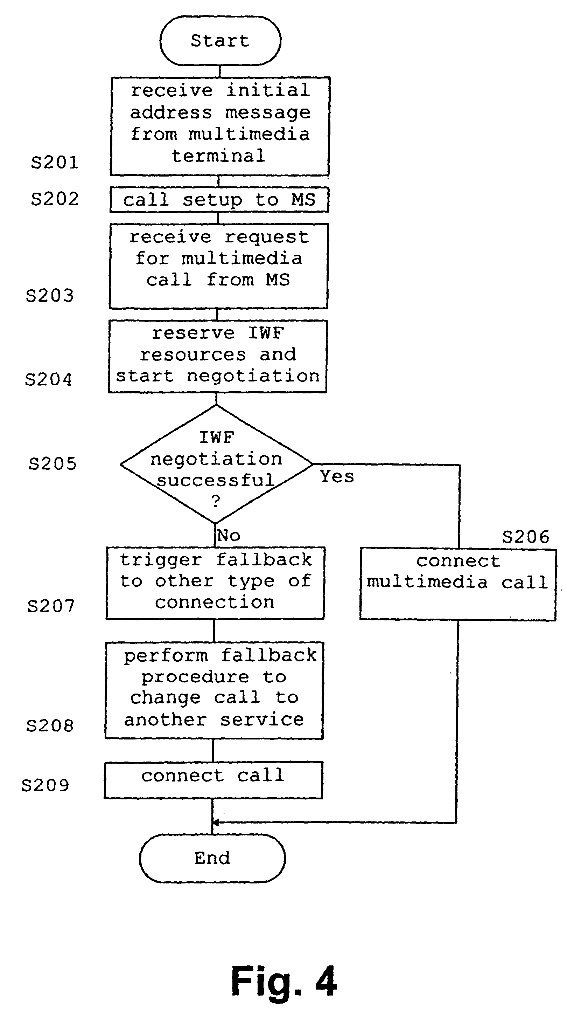

In the following, an establishment of a mobile-terminated multimedia connection is described with reference to Fig. 4.

Initially, a setup message, e.g. an Initial Address Message (IAM) is received by the MSC/IWF 3 from a multimedia terminal, e.g. the TE 5, of the fixed network 4 (step S201). Based on the received initial address message and a subscriber related service information possibly stored in the Home Location Register (HLR) of the mobile network, the MSC/IWF 3 or the IWF 32 checks the multimedia call and the MSC/IWF 3 transmits a call setup message to the MS 1 via the BSS 2 (step S202). In particular, the call may be first established as a HSCSD (High Speed Circuit Switched Data) call, in order to provide a fast setup processing.

The setup message from the MSC/IWF 3 to the MS 1 may not contain a service definition at all, e.g. in case where a single numbering scheme is used and the setup message from the fixed network 4 does not contain any service definition.

Then, the MS 1 replies by transmitting a request message for a multimedia call, e.g. a H.324 call, wherein the requested call type may depend on the received calling number. Then, the MSC/IWF 3 receives the request message for the multimedia call in step S203 and controls the IWF 32, so as to reserve the corresponding interworking function resources, and to start a corresponding handshake or negotiation processing, e.g. V.8, V.8bis or V.140 negotiation or H.245-H.223 messages, with the called party of the fixed network 4 (step S204).

Then, the fallback control unit 33 checks whether the negotiation performed by the IWF 32 was successful, or not (step S205). In case the negotiation was successful, the fallback control unit 33 controls the connection control unit 34 so as to establish a multimedia connection via the switch 31 to the called party.

If the fallback control unit 33 determines that the negotiation was not successful, it triggers a fallback connection to another type of connection supported by the called party (step S207). The fallback connection is determined based on the dialled number of the called party or may be obtained as described in connection with the mobile-originated connection establishing according to Fig. 3.

Based on the determined fallback connection, the connection control unit 34 performs a fallback procedure in step S208, in order to change the call to another service corresponding to the fallback connection. Finally, the call is connected to the fallback connection (step S209) and the mobile-terminated call is established without any disconnection or error processing at the respective end terminals.

However, the above described fallback to a speech connection may lead to the problem that the far end party (e.g. the TE 5) has to wait for several seconds while the MSC/IWF 3 is detecting or checking the capabilities of the far end terminal. Thus, the far end party may clear the call "as a failure" during this waiting period. Such a rejection of the call setup and clearing of the call incurs a so-called cause code to be sent the MS 1 to thereby inform the user of the cause of the problem.

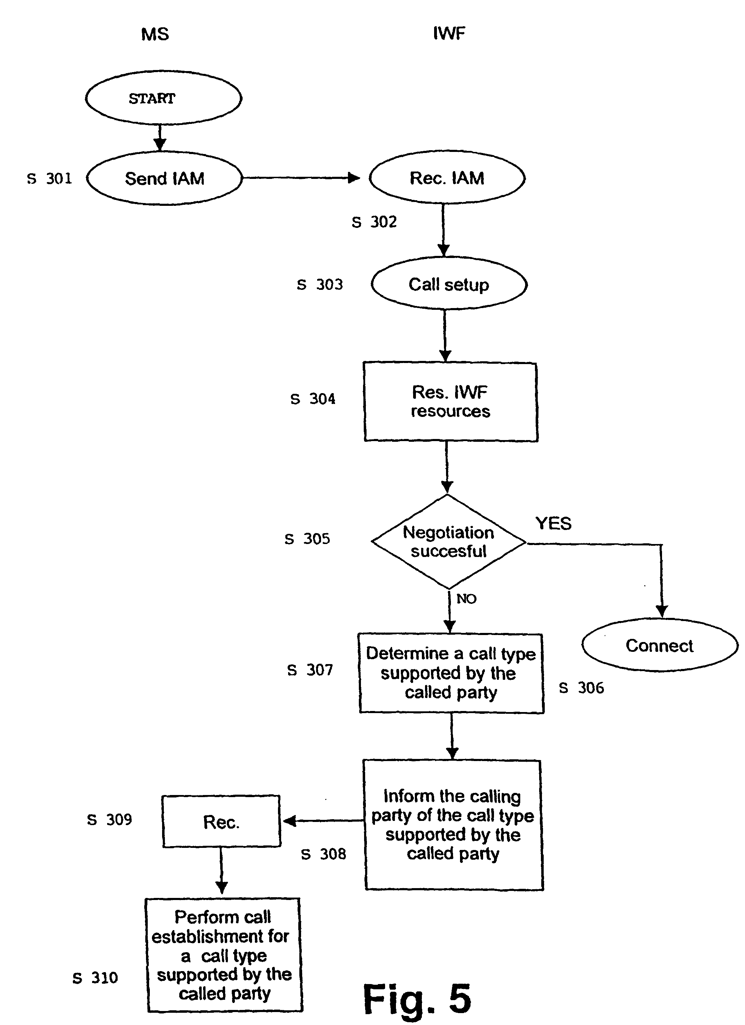

In the following, a call retry procedure by which the above problem can be prevented is described with reference to Fig. 5.

Initially, the MS 1 requests a multimedia call, e.g. a H.324 call, and transmits a corresponding Initial Address Message (IAM) to the MSC/IWF 3 (step S101). The IAM is received by the MSC/IWF 3 in step S302. 3 performs a call

Based on the received IAM, the MSC/IWF 3 performs a call setup procedure (S303) and the IWF 32 reserves the required interworking function resources and starts the handshake or negotiation processing with the fixed network 4 in order to set up the multimedia connection to the called party, e.g. the TE 5 (step S304).

Then, the fallback control unit 33 checks in step S305 whether the negotiation performed by the IWF 32 was successful, or not.

In case the fallback control unit 33 determines in step S305 that the negotiation was successful, it controls the connection control unit 34, so as to connect the multimedia call via the switch 31 (step S306).

If the fallback control unit 33 determines in step S305 that the negotiation was not successful, i.e. that the called party does not support the multimedia call, it determines a call type supported by the called party (S307). The supported call type or types may be determined by monitoring and analyzing the initial inband or outband signaling for setup negotiation between the IWF 32 and the called party.

The result of the analysis, i.e. an information what the far end party can support, is then transmitted to the MS 1 in order to inform the calling party of the call type(s) supported by the called party (step S308). This transmittal may be performed by using the existing cause code mechanism and defining corresponding new parameter values.

Having received this information in step S309, the MS 1 initiates a call retry procedure based on the received information, e.g. using the new parameter values known to be supported by the far end party. Thus, the MS 1 performs a call establishment for a call type indicated as being supported by the called party (step S310). Thereby, in all propability, a successful call retry will be achieved.

As an alternative, the result of the above analysis of the supported call type(s), the network itself (e.g. the MSC/IWF 3) may perform the call retry towards the far end party. This may be achieved by providing a corresponding retry procedure in the IWF 32, which is initiated by the fallback control unit 33 and based on the new parameters obtained as a result of the analysis.

The retry mechanism may cover both network incompatibilities (e.g. UDI requested, but only RDI (Restricted Digital Information) or 3.1 kHz supported by the network; or RDI requested, but only 3.1 kHz supported by the network) and far end terminal incompatibilities (e.g. UDI/RDI requested, but only 3.1 kHz or speech supported by the far end terminal; or 3.1 kHz requested, but only speech supported by the far end terminal).

Hence, the called party does not have to wait uninformed or uncertain for something to happen. Actually, the waiting is done by the calling party during the "alerting period" of the call setup, which removes the risk of clearing the call before it has really started.

It is to be noted, that the processing performed by the MSC/IWF 3 may be implemented by a control program of a microprocessor such as a CPU, wherein the respective blocks 33 and 34 are replaced by corresponding software features provided in a ROM allocated to the CPU.

Furthermore, the connection establishment processing described in the above preferred embodiment can be performed in any telecommunication network to which terminals supporting different types of connections are connected, and is not restricted to a mobile switching center of a mobile network. Moreover, the fallback connection (i.e. second type of connection) is not restricted to a speech connection, but can be a multimedia connection or any type of connection supported by the called party.

Furthermore, the determination of the fallback connection may be performed by a combination of the above described possibilities, and a predetermined priority order may be allocated in case a plurality of fallback connections are determined.

The above description of the preferred embodiment and the accompanying drawings are only intended to illustrate the present invention. The preferred embodiment of the invention may vary within the scope of the attached claims.

In summary, the present invention relates to a method and system for establishing a connection, wherein a handshake processing is performed with the other party to establish a first type of connection. If the handshake processing is successful, the first type of connection is established. If the handshake processing is not successful, i.e. the other party does not support the first type of connection, a fallback procedure is started to change the call to a second type of connection determined during the connection establishment. The change to the second type of connection may be performed directly or may be based on a call retry procedure. Thereby, inconvenient disconnections or error processings at the end terminals can be prevented.

## Claims

1. A method for establishing a connection in a telecommunication network comprising different protocols, and an interworking function (MSC, IWF) for adapting the different protocol features used for a connection between a calling terminal and the interworking function and the interworking function and a called terminal, comprising the steps of:
a) receiving at the interworking function from the calling terminal a request to establish a connection of a first type using first protocol features;
b) performing a setup processing according to the first protocol features used for the first type of connection between the interworking function and the called terminal, the processing including reserving resources at the interworking function and starting negotiation processing in order to set up the connection to the called terminal;
c) determining a second type of connection;
d) checking the result of said setup processing; and, when said checking step indicates that said setup processing was not successful,
e) establishing said second type of connection between the interworking function and the called terminal and changing the connection between the calling terminal and the interworking function to the second type of connection,
wherein said determining step c) comprises a monitoring operation performed in a network element (3) arranged between the calling terminal and said called terminal,
wherein at least one type of connection supported by said called terminal is determined as said second type of connection in said network element (3) by monitoring a signaling for call establishment,
wherein the call is re-established without any disconnection based on the determination result, and
wherein the determination result is signaled to said calling terminal which then performs the call re-establishment operation,
wherein the call re-establishment includes a release of resources at the interworking function and a channel mode modification.

2. A method according to claim 1, wherein said first type of connection is a multimedia connection.

3. A method according to any one of the preceding claims, wherein said second type of connection is a speech connection.

4. A method according to any one of the preceding claims, further comprising the step of establishing said first type of connection, when said result of said checking step indicates that said setup processing was successful.

5. A method according to any one of the preceding claims, wherein said first type of connection is a video connection.

6. A method according to any one of the preceding claims, wherein said negotiation processing is an interworking processing.

7. A method according to any one of the preceding claims, wherein said first type of connection is a connection between a mobile terminal **(1)** and a network terminal **(5)** of a fixed network **(4)**.

8. A method according to any one of the preceding claims, wherein said second type of connection is determined on the basis of the calling number of said called terminal.

9. A method according to any one of the preceding claims, wherein said second type of connection is determined on the basis of a predetermined priority order.

10. A method according to any one of the preceding claims, wherein said first type of connection is compliant with the ITU-T Recommendation H.324.

11. A method according to any one of the preceding claims, wherein said second type of connection is established by performing said channel mode modification and changing switching.

12. A method according to any one of the preceding claims, further comprising the step of establishing a HSCSD call to said called terminal.

13. A system for establishing a connection in a telecommunication network comprising different protocols, and an interworking function (MSC, IWF) for adapting the different protocol features used for a connection between a calling terminal and the interworking function and the interworking function and a called terminal, comprising:
a) means for receiving at the interworking function from the calling terminal a request to establish a connection of a first type (multimedia connection) using first protocol features;
b) means for performing a setup processing according to the first protocol features used for the first type of connection between the interworking function and the called terminal, the processing including reserving resources at the interworking function and starting negotiation processing in order to set up the connection to the called party;
c) determining means (33) for determining a second type of connection;
d) checking means (33) for checking the result of said setup processing; and, when said checking step indicates that said setup processing was not successful,
e) connection control means **(34; 1)** for establishing said second type of connection between the interworking function and the called terminal and changing the connection between the calling terminal and the interworking function to the second type of connection,
wherein said determining means (33) is provided in a network element (3) arranged between the calling terminal and said called terminal, and is adapted to perform a monitoring operation,
wherein said determining means (33) is adapted to determine at least one type of connection supported by said called terminal as said second type of connection in said network element (3) by monitoring a signaling for call establishment,
wherein the system is adapted to re-establish the call without any disconnection based on the determination result, and
wherein the system is adapted to signal the determination result to said calling terminal which is adapted to perform the call re-establishment operation in response thereto,
wherein the call re-establishment includes a release of resources at the interworking function and a channel mode modification.

14. A system according to claim 13, wherein said connection control means **(1)** is arranged at said calling terminal, and wherein the determination result is signaled by said determining means **(33)** to said calling terminal.

15. A system according to claim 13 or 14, wherein said first type of connection is a multimedia connection.

16. A system according to any one of claims 13 to 15, wherein said second type of connection is a speech connection.

17. A system according to any one of claims 13 to 16, wherein said network element is an interworking unit **(3)**.

18. A system according to claim 17, wherein said interworking unit **(3)** is arranged to check said first type of connection.

19. A system according to any one of claims 13 to 18, wherein said determining means **(33)** is arranged to determine said second type of connection on the basis of the calling number of said called terminal.

20. A system according to any one of claims 13 to 19, wherein said determining means **(33)** is arranged to determine said second type of connection on the basis of a predetermined priority order.

## Patentansprüche

1. Verfahren zum Herstellen einer Verbindung in einem Telekommunikationsnetzwerk mit unterschiedlichen Protokollen und einer Zusammenarbeitsfunktion (MSC, IWF) zum Anpassen der unterschiedlichen für eine Verbindung zwischen einem rufenden Endgerät und der Zusammenarbeitsfunktion sowie der Zusammenarbeitsfunktion und einem gerufenen Endgerät verwendeten Protokollmerkmale, mit den Schritten:
a) Empfangen einer Anforderung zum Herstellen einer Verbindung eines ersten Typs unter Verwendung erster Protokollmerkmale von dem rufenden Endgerät an der Zusammenarbeitsfunktion;
b) Durchführen einer Aufbau-Verarbeitung gemäß den für den ersten Verbindungstyp zwischen der Zusammenarbeitsfunktion und dem gerufenen Endgerät verwendeten ersten Protokollmerkmalen, wobei die Verarbeitung ein Reservieren von Ressourcen an der Zusammenarbeitsfunktion und ein Starten einer Verhandlungs-Verarbeitung zum Aufbauen der Verbindung zu dem gerufenen Endgerät aufweist;
c) Bestimmen eines zweiten Verbindungstyps;
d) Überprüfen des Ergebnisses der Aufbau-Verarbeitung; und, wenn der Überprüfungsschritt angibt, dass die Aufbau-Verarbeitung nicht erfolgreich war,
e) Herstellen des zweiten Verbindungstyps zwischen der Zusammenarbeitsfunktion und dem gerufenen Endgerät und Umstellen der Verbindung zwischen dem rufenden Endgerät und der Zusammenarbeitsfunktion auf den zweiten Verbindungstyp,
wobei der Bestimmungsschritt c) einen in einem Netzwerkelement (3) durchgeführten Überwachungsbetrieb aufweist, das zwischen dem rufenden Endgerät und dem gerufenen Endgerät angeordnet ist,
wobei zumindest ein von dem gerufenen Endgerät unterstützter Verbindungstyp in dem Netzwerkelement (3) durch Überwachen einer Signalisierung zur Verbindungsherstellung als der zweite Verbindungstyp bestimmt wird,
wobei der Ruf ohne eine Trennung auf Grundlage des Bestimmungsergebnisses erneut hergestellt wird, und
wobei das Bestimmungsergebnis an das rufende Endgerät signalisiert wird, das dann die Ruf-Wiederherstellungsoperation durchführt,
wobei die Ruf-Wiederherstellung eine Freigabe von Ressourcen an der Zusammenarbeitsfunktion und eine Kanalbetriebsart-Modifikation umfasst.

2. Verfahren gemäß Anspruch 1, bei dem der erste Verbindungstyp eine Multimedia-Verbindung ist.

3. Verfahren gemäß einem der vorangehenden Ansprüche, bei dem der zweite Verbindungstyp eine Sprach-Verbindung ist.

4. Verfahren gemäß einem der vorangehenden Ansprüche, zusätzlich mit dem Schritt des Herstellens des ersten Verbindungstyps, wenn das Ergebnis des Überprüfungsschritts angibt, dass die Aufbau-Verarbeitung erfolgreich war.

5. Verfahren gemäß einem der vorangehenden Ansprüche, bei dem der erste Verbindungstyp eine Video-Verbindung ist.

6. Verfahren gemäß einem der vorangehenden Ansprüche, bei dem die Verhandlungs-Verarbeitung eine Zusammenarbeits-Verarbeitung ist.

7. Verfahren gemäß einem der vorangehenden Ansprüche, bei dem der erste Verbindungstyp eine Verbindung zwischen einem Mobil-Endgerät (1) und einem Netzwerk-Endgerät (5) eines Festnetzes (4) ist.

8. Verfahren gemäß einem der vorangehenden Ansprüche, bei dem der zweite Verbindungstyp auf der Grundlage der Rufnummer des rufenden Endgeräts bestimmt wird.

9. Verfahren gemäß einem der vorangehenden Ansprüche, bei dem der zweite Verbindungstyp auf der Grundlage einer vorbestimmten Prioritätenfolge bestimmt wird.

10. Verfahren gemäß einem der vorangehenden Ansprüche, bei dem der erste Verbindungstyp mit der ITU-T-Empfehlung H.324 konform ist.

11. Verfahren gemäß einem der vorangehenden Ansprüche, bei dem der zweite Verbindungstyp durch eine Durchführung der Kanalbetriebsart-Modifikation und einer Veränderung des Vermittelns hergestellt wird.

12. Verfahren gemäß einem der vorangehenden Ansprüche, zusätzlich mit dem Schritt des Herstellens eines HSCSD-Rufs zu dem gerufenen Endgerät.

13. System zum Herstellen einer Verbindung in einem Telekommunikationsnetzwerk mit unterschiedlichen Protokollen und einer Zusammenarbeitsfunktion (MSC, IWF) zum Anpassen der unterschiedlichen für eine Verbindung zwischen einem rufenden Endgerät und der Zusammenarbeitsfunktion sowie der Zusammenarbeitsfunktion und einem gerufenen Endgerät verwendeten Protokollmerkmale, mit:
a) einer Einrichtung zum Empfangen einer Anforderung zum Herstellen einer Verbindung eines ersten Typs (Multimedia-Verbindung) unter Verwendung erster Protokollmerkmale von dem rufenden Endgerät an der Zusammenarbeitsfunktion;
b) einer Einrichtung zum Durchführen einer Aufbau-Verarbeitung gemäß den für den ersten Verbindungstyp zwischen der Zusammenarbeitsfunktion und dem gerufenen Endgerät verwendeten ersten Protokollmerkmalen, wobei die Verarbeitung ein Reservieren von Ressourcen an der Zusammenarbeitsfunktion und ein Starten einer Verhandlungs-Verarbeitung zum Aufbauen der Verbindung zu der gerufenen Seite aufweist;
c) einer Bestimmungseinrichtung (33) zum Bestimmen eines zweiten Verbindungstyps;
d) einer Überprüfungseinrichtung (33) zum Überprüfen des Ergebnisses der Aufbau-Verarbeitung; und, wenn der Überprüfungsschritt angibt, dass die Aufbau-Verarbeitung nicht erfolgreich war,
e) einer Verbindungssteuerungs-Einrichtung (34; 1) zum Herstellen des zweiten Verbindungstyps zwischen der Zusammenarbeitsfunktion und dem gerufenen Endgerät und Umstellen der Verbindung zwischen dem rufenden Endgerät und der Zusammenarbeitsfunktion auf den zweiten Verbindungstyp,
wobei die Bestimmungseinrichtung (33) in einem zwischen dem rufenden Endgerät und dem gerufenen Endgerät angeordneten Netzwerkelement (3) bereitgestellt ist, und eingerichtet ist, einen Überwachungsbetrieb durchzuführen,
wobei die Bestimmungseinrichtung (33) eingerichtet ist, zumindest einen von dem gerufenen Endgerät unterstützten Verbindungstyp in dem Netzwerkelement (3) durch Überwachen einer Signalisierung zur Verbindungsherstellung als den zweiten Verbindungstyp zu bestimmen,
wobei das System eingerichtet ist, den Ruf ohne eine Trennung auf Grundlage des Bestimmungsergebnisses wiederherzustellen, und
wobei das System eingerichtet ist, das Bestimmungsergebnis an das rufende Endgerät zu signalisieren, das eingerichtet ist, die Ruf-Wiederherstellungsoperation als Reaktion darauf durchzuführen,
wobei die Ruf-Wiederherstellung eine Freigabe von Ressourcen an der Zusammenarbeitsfunktion und eine Kanalbetriebsart-Modifikation umfasst.

14. System gemäß Anspruch 13, bei dem die Verbindungssteuerungs-Einrichtung (1) an dem rufenden Endgerät angeordnet ist, und wobei das Bestimmungsergebnis von der Bestimmungseinrichtung (33) an das rufende Endgerät signalisiert wird.

15. System gemäß Anspruch 13 oder 14, bei dem der erste Verbindungstyp eine Multimedia-Verbindung ist.

16. System gemäß einem der Ansprüche 13 bis 15, bei dem der zweite Verbindungstyp eine Sprach-Verbindung ist.

17. System gemäß einem der Ansprüche 13 bis 16, bei dem das Netzwerkelement eine Zusammenarbeitseinheit (3) ist.

18. System gemäß Anspruch 17, bei dem die Zusammenarbeitseinheit (3) eingerichtet ist, den ersten Verbindungstyp zu überprüfen.

19. System gemäß einem der Ansprüche 13 bis 18, bei dem die Bestimmungseinrichtung (33) eingerichtet ist, den zweiten Verbindungstyp auf Grundlage der Rufnummer des rufenden Endgeräts zu bestimmen.

20. System gemäß einem der Ansprüche 13 bis 19, bei dem die Bestimmungseinrichtung (33) eingerichtet ist, den zweiten Verbindungstyp auf Grundlage einer vorbestimmten Prioritätenfolge zu bestimmen.

## Revendications

1. Procédé pour établir une connexion dans un réseau de télécommunication comprenant différents protocoles et une fonction d'interfonctionnement (MSC, IWF) pour adapter les différentes caractéristiques de protocole utilisées pour une connexion entre un terminal appelant et la fonction d'interfonctionnement et entre la fonction d'interfonctionnement et un terminal appelé, comprenant les étapes consistant à :
a) la réception, au niveau de la fonction d'interfonctionnement, du terminal appelant, d'une requête pour établir une connexion d'un premier type en utilisant des premières caractéristiques de protocole ;
b) l'exécution d'un traitement de configuration conformément aux premières caractéristiques de protocole utilisées pour le premier type de connexion entre la fonction d'interfonctionnement et le terminal appelé, le traitement comprenant la réservation de ressources au niveau de la fonction d'interfonctionnement et le commencement d'un traitement de négociation afin de configurer la connexion vers l'abonné appelé ;
c) la détermination d'un deuxième type de connexion ;
d) le contrôle du résultat dudit traitement de configuration ; et, lorsque ladite étape de contrôle indique que ledit traitement de configuration n'a pas été réussi,
e) l'établissement dudit deuxième type de connexion entre la fonction d'interfonctionnement et le terminal appelé et la modification de la connexion entre le terminal appelant et la fonction d'interfonctionnement en le deuxième type de connexion,
dans lequel ladite étape de détermination c) comprend une opération de surveillance effectuée dans un élément de réseau (3) agencé entre le terminal appelant et ledit terminal appelé,
dans lequel au moins un type de connexion pris en charge par ledit terminal appelé est déterminé en tant que dit deuxième type de connexion dans ledit élément de réseau (3) en surveillant une signalisation pour un établissement d'appel,
dans lequel l'appel est rétabli sans aucune déconnexion sur la base du résultat de la détermination, et
dans lequel le résultat de la détermination est signalé audit terminal appelant qui effectue ensuite l'opération de rétablissement d'appel,
dans lequel le rétablissement d'appel comprend une libération de ressources au niveau de la fonction d'interfonctionnement et une modification de mode de canal.

2. Procédé selon la revendication 1, dans lequel ledit premier type de connexion est une connexion multimédia.

3. Procédé selon l'une quelconque des revendications précédentes, dans lequel ledit deuxième type de connexion est une connexion vocale.

4. Procédé selon l'une quelconque des revendications précédentes, comprenant en outre l'étape consistant à établir ledit premier type de connexion, lorsque ledit résultat de ladite étape de contrôle indique que ledit traitement de configuration a été réussi.

5. Procédé selon l'une quelconque des revendications précédentes, dans lequel ledit premier type de connexion est une connexion vidéo.

6. Procédé selon l'une quelconque des revendications précédentes, dans lequel ledit traitement de négociation est un traitement d'interfonctionnement.

7. Procédé selon l'une quelconque des revendications précédentes, dans lequel ledit premier type de connexion est une connexion entre un terminal mobile (1) et un terminal de réseau (5) d'un réseau fixe (4).

8. Procédé selon l'une quelconque des revendications précédentes, dans lequel ledit deuxième type de connexion est déterminé sur la base du numéro d'appel dudit terminal appelé.

9. Procédé selon l'une quelconque des revendications précédentes, dans lequel ledit deuxième type de connexion est déterminé sur la base d'un ordre de priorités prédéterminé.

10. Procédé selon l'une quelconque des revendications précédentes, dans lequel ledit premier type de connexion est conforme à la recommandation H.324 de l'UIT-T.

11. Procédé selon l'une quelconque des revendications précédentes, dans lequel ledit deuxième type de connexion est établi en effectuant ladite modification de mode de canal et en modifiant la commutation.

12. Procédé selon l'une quelconque des revendications précédentes, comprenant en outre l'étape consistant à établir un appel HSCSD vers ledit terminal appelé.

13. Système pour établir une connexion dans un réseau de télécommunication comprenant différents protocoles et une fonction d'interfonctionnement (MSC, IWF) pour adapter les différentes caractéristiques de protocole utilisées pour une connexion entre un terminal appelant et la fonction d'interfonctionnement et entre la fonction d'interfonctionnement et un terminal appelé, comprenant :
a) des moyens pour recevoir, au niveau de la fonction d'interfonctionnement, du terminal appelant, une requête pour établir une connexion d'un premier type (connexion multimédia) en utilisant des premières caractéristiques de protocole ;
b) des moyens pour exécuter un traitement de configuration conformément aux premières caractéristiques de protocole utilisées pour le premier type de connexion entre la fonction d'interfonctionnement et le terminal appelé, le traitement comprenant la réservation de ressources au niveau de la fonction d'interfonctionnement et le commencement d'un traitement de négociation afin de configurer la connexion vers l'abonné appelé ;
c) des moyens de détermination (33) pour déterminer un deuxième type de connexion ;
d) des moyens de contrôle pour contrôler le résultat dudit traitement de configuration ; et, lorsque ladite étape de contrôle indique que ledit traitement de configuration n'a pas été réussi,
e) des moyens de commande de connexion (34 ; 1) pour établir ledit deuxième type de connexion entre la fonction d'interfonctionnement et le terminal appelé et pour modifier la connexion entre le terminal appelant et la fonction d'interfonctionnement en le deuxième type de connexion,
dans lequel lesdits moyens de détermination (33) sont prévus dans un élément de réseau (3) agencé entre le terminal appelant et ledit terminal appelé et sont adaptés pour effectuer une opération de surveillance,
dans lequel lesdits moyens de détermination (33) sont adaptés pour déterminer au moins un type de connexion pris en charge par ledit terminal appelé en tant que dit deuxième type de connexion dans ledit élément de réseau (3) en surveillant une signalisation pour un établissement d'appel,
dans lequel le système est adapté pour rétablir l'appel sans aucune déconnexion sur la base du résultat de la détermination, et
dans lequel le système est adapté pour signaler le résultat de la détermination audit terminal appelant qui est adapté pour effectuer l'opération de rétablissement d'appel en réponse à celui-ci,
dans lequel le rétablissement d'appel comprend une libération de ressources au niveau de la fonction d'interfonctionnement et une modification de mode de canal.

14. Système selon la revendication 13, dans lequel lesdits moyens de commande de connexion (1) sont agencés au niveau dudit terminal appelant, et dans lequel le résultat de la détermination est signalé par lesdits moyens de détermination (33) audit terminal appelant.

15. Système selon la revendication 13 ou 14, dans lequel ledit premier type de connexion est une connexion multimédia.

16. Système selon l'une quelconque des revendications 13 à 15, dans lequel ledit deuxième type de connexion est une connexion vocale:

17. Système selon l'une quelconque des revendications 13 à 16, dans lequel ledit élément de réseau est une unité d'interfonctionnement (3).

18. Système selon la revendication 17, dans lequel ladite unité d'interfonctionnement (3) est agencée pour contrôler ledit premier type de connexion.

19. Système selon l'une quelconque des revendications 13 à 18, dans lequel lesdits moyens de détermination (33) sont agencés pour déterminer ledit deuxième type de connexion sur la base du numéro d'appel dudit terminal appelé.

20. Système selon l'une quelconque des revendications 13 à 19, dans lequel lesdits moyens de détermination (33) sont agencés pour déterminer ledit deuxième type de connexion sur la base d'un ordre de priorités prédéterminé.
